# EUROPÄISCHE PATENTANMELDUNG

(11) **EP 1 391 230 A1**
(43) Veröffentlichungstag der Anmeldung: **25.02.2004**
(21) Anmeldenummer: 03017326.4
(22) Anmeldetag: 31.07.2003
(51) Int. Cl.: B01D 46/10, B01D 46/52

(54) **Luftfiltereinheit**

(30) Priorität: 15.08.2002 CH 14012002
(71) Anmelder: McLeod Russel Filter AG, 8610 Uster (CH)
(72) Erfinder: Desponds, Eduard, 6406 Greppen (CH); Nägeli, Andreas, 8820 Wädenswil (CH); Kames, Jost, Dr., Dürnten (CH)
(74) Vertreter: Aldag, Wolfgang, Dipl.-Ing.

(57) **Zusammenfassung**

In einen kastenförmigen Einbaurahmen (2) mit rechteckigem Querschnitt und genormten Abmessungen wird ein Filterelement (3) eingebaut, dessen Außenabmessungen, insbesondere dessen Höhe und dessen Breite, kleiner sind als die entsprechenden Innenabmessungen des Einbaurahmens (2). Zum Ausgleichen der Unterschiede in den Abmessungen von Filterelement (3) und Einbaurahmen (2) werden mit dem Filterelement (3) von diesem unabhängige Adapterelemente (4,5) in den Einbaurahmen (2) eingebaut. Die Adapterelemente (4,5) sind im Einbaurahmen (2) geführt und führen ihrerseits das Filterelement (3), das auf diese Weise im Einbaurahmen (2) positioniert wird.

## Beschreibung

Die Erfindung betrifft eine Luftfiltereinheit gemäss dem Oberbegriff des Anspruchs 1.

Die bekannten Luftfiltereinheiten bestehen aus einem kastenförmigen Einbaurahmen und einem zu diesem Einbaurahmen passenden Filterelement, das in den Einbaurahmen eingebaut ist und durch ein Filtergehäuse und ein in diesem angeordnetes Filtermedium gebildet ist. Die verwendeten Einbaurahmen haben in der Regel genormte Außen- und Innenabmessungen, insbesondere in der Breite und in der Höhe. Die passenden Filterelemente sind in ihren Außenabmessungen auf die Innenabmessungen der Einbaurahmen abgestimmt, d.h. die Breite und die Höhe des Filterelementes entspricht der Breite bzw. der Höhe des Einbaurahmens. In gewissen Fällen besteht jedoch der Wunsch, in einen gegebenen Einbaurahmen ein Filterelement einzubauen, das eigentlich für den Einsatz mit einem andern Typ von Einbaurahmen bestimmt ist.

Der vorliegenden Erfindung liegt die Aufgabe zugrunde, bei einer Luftfiltereinheit der eingangs genannten Art die Möglichkeit zu schaffen, mit einfachen Mitteln in einen Einbaurahmen bestimmter Größe ein Filterelement einzubauen, das von den Außenabmessungen her nicht für einen Einsatz mit diesem Einbaurahmen vorgesehen ist.

Diese Aufgabe wird erfindungsgemäß mit einer Luftfiltereinheit mit den Merkmalen des Anspruchs 1 gelöst.

Durch das Einsetzen einer Adapteranordnung zwischen den Einbaurahmen und das Filterelement, dessen Außenabmessungen kleiner sind als die Innenabmessungen des Einbaurahmens, werden auf einfache Weise die Unterschiede in diesen Abmessungen von Einbaurahmen und Filterelement ausgeglichen und so ein einwandfreies Positionieren des Filterelementes erreicht. Die Verwendung einer Adapteranordnung ermöglicht es, bei einem Einbaurahmen gegebener Größe das einzubauende Filterelement aus einer Anzahl von verschiedenartigen Filterelementen auszuwählen. Man ist nicht mehr darauf angewiesen, das zu diesem bestimmten Einbaurahmen als passend angebotene Filterelement zu verwenden.

Ein besonders einfaches Einbauen von Filterelement und Adapteranordnung in den Einbaurahmen ist bei einer Ausgestaltung der Erfindung möglich, bei der die Adapteranordnung beim Einbauen des Filterelementes in den Einbaurahmen zusammen mit dem Filterelement einschiebbar ist. Besonders vorteilhaft ist es, wenn diese in einer Richtung eingeschoben wird, die der Luftströmungsrichtung entgegengesetzt ist.

Vorzugsweise ist eine Adapteranordnung, die als eine separate Baueinheit ausgebildet ist und die unabhängig von dem Einbaurahmen herstellbar ist und dann in einer erfindungsgemäßen Luftfiltereinheit vorteilhaft Verwendung findet.

Die Herstellung der Adapteranordnung und deren Einbau ist vor allem dann besonders einfach, wenn die Adapteranordnung zwei- oder mehrteilig ausgebildet ist.

Weitere bevorzugte Ausgestaltungen der erfindungsgemäßen Luftfiltereinheit bilden die Gegenstände der übrigen abhängigen Unteransprüche.

Im folgenden wird anhand der Zeichnungen ein Ausführungsbeispiel des Erfindungsgegenstandes näher erläutert. Es zeigt rein schematisch:
Figur 1 eine Luftfiltereinheit in einer Ansicht in Richtung eines Pfeiles A aus Figur 2,
Figur 2 die Luftfiltereinheit gemäß der Figur 1 in einer Seitenansicht,
Figur 3 in einer der Figur 2 entsprechenden Seitenansicht und in einem gegenüber der Figur 2 vergrößerten Maßstab den unteren Bereich der Luftfiltereinheit,
Figur 4 den Einbaurahmen der Luftfiltereinheit gemäss den Figuren 1 bis 3 in einer Ansicht in Richtung eines Pfeiles B aus Figur 5,
Figur 5 den Einbaurahmen gemäß der Figur 4 in einer Seitenansicht,
Figur 6 das Filterelement der Luftfiltereinheit gemäss den Figuren 1 -3 in einer Ansicht in Richtung eines Pfeiles C aus Figur 7,
Figur 7 das Filterelement gemäss Figur 6 in einer Seitenansicht,
Figur 8 das Filterelement gemäß der Figur 6 in einer Draufsicht,
Figur 9 ein Adapterelement der Adapteranordnung für die Luftfiltereinheit gemäß den Figuren 1 bis 3 in einer Draufsicht,
Figur 10 einen Schnitt entlang der Linie X -X in Figur 9,
Figur 11 das Adapterelement gemäss Figur 9 in einer Seitenansicht in Richtung eines Pfeiles D in der Figur 9,
Figur 12 in einer Seitenansicht den Einbaurahmen, das Filterelement und die Adapterelemente vor dem Zusammenbauen und
Figur 13 den Einbaurahmen, das Filterelement und die Adapterelemente während des Zusammenbauens.

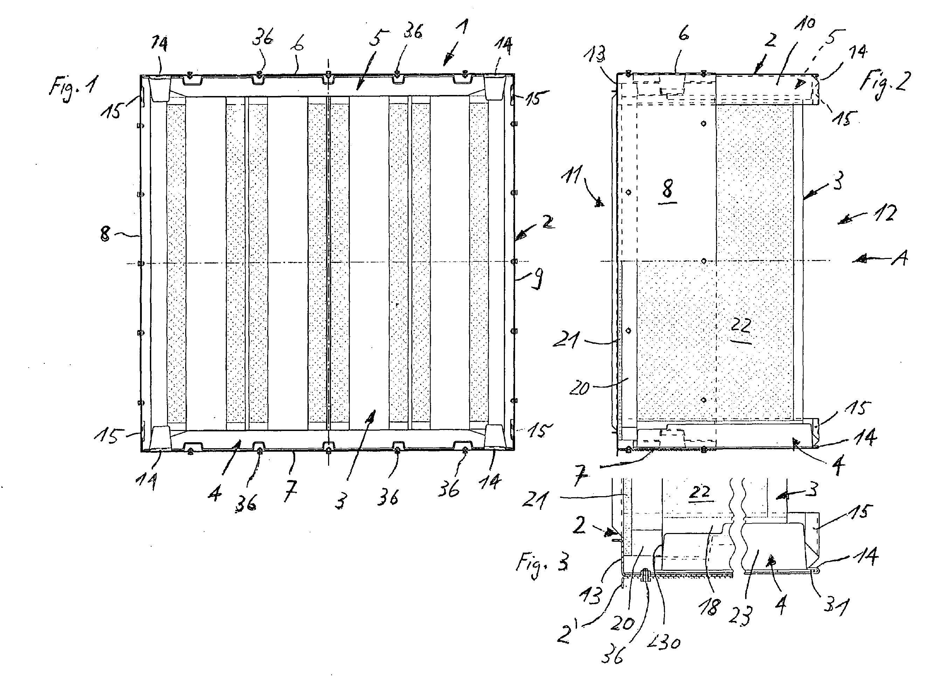

Die in den Figuren 1 bis 3 im zusammengebauten Zustand dargestellte Luftfiltereinheit 1 besteht aus einem kastenförmigen Einbaurahmen 2, einem in diesen eingebauten Filterelement 3 sowie einer Adapteranordnung, die durch zwei gleichartige Adapterelemente 4 und 5 gebildet ist und zwischen das Filterelement 3 und den Einbaurahmen 2 eingesetzt ist.

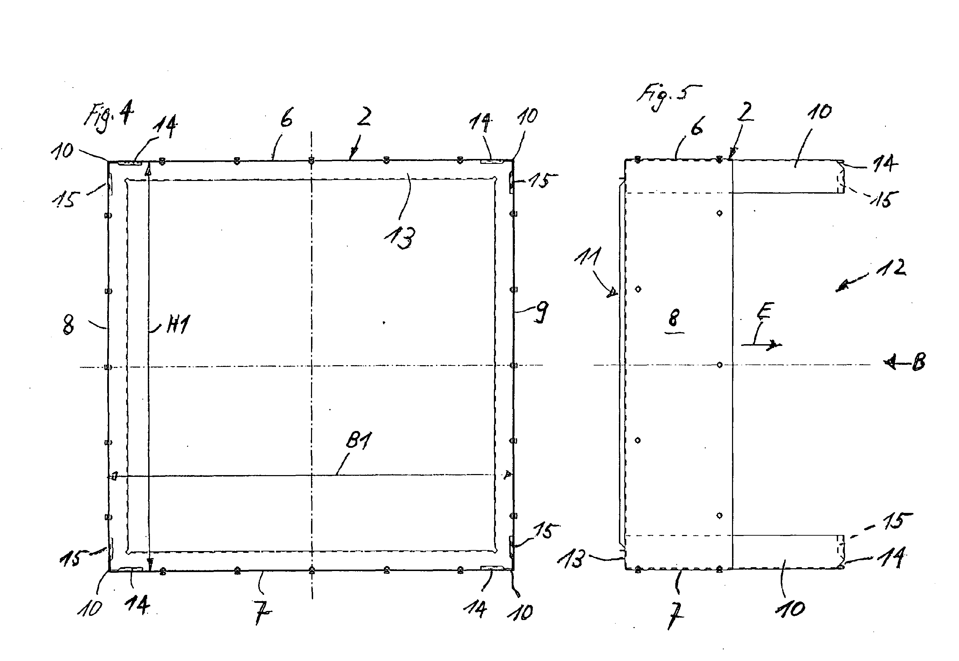

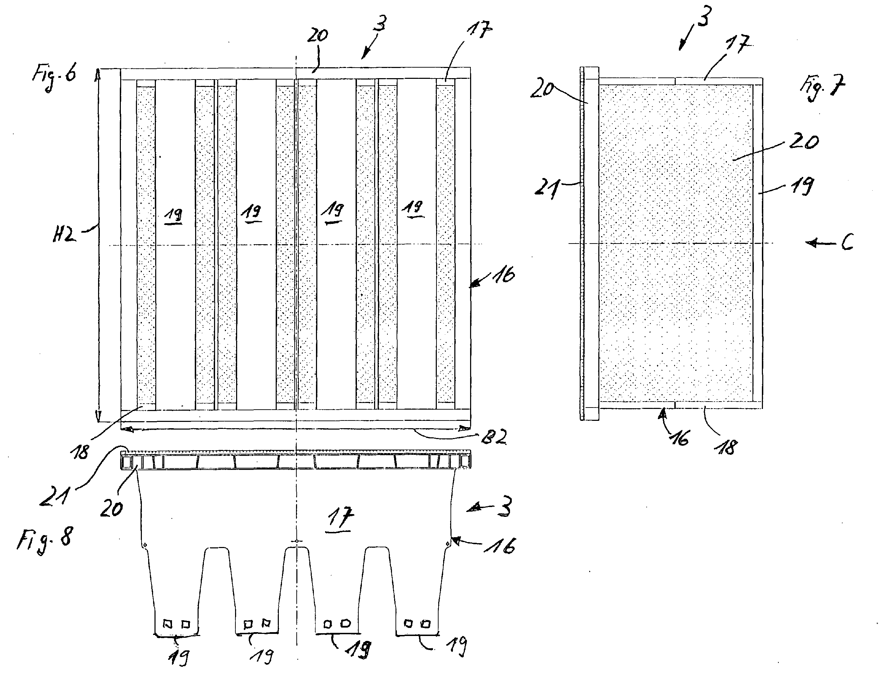

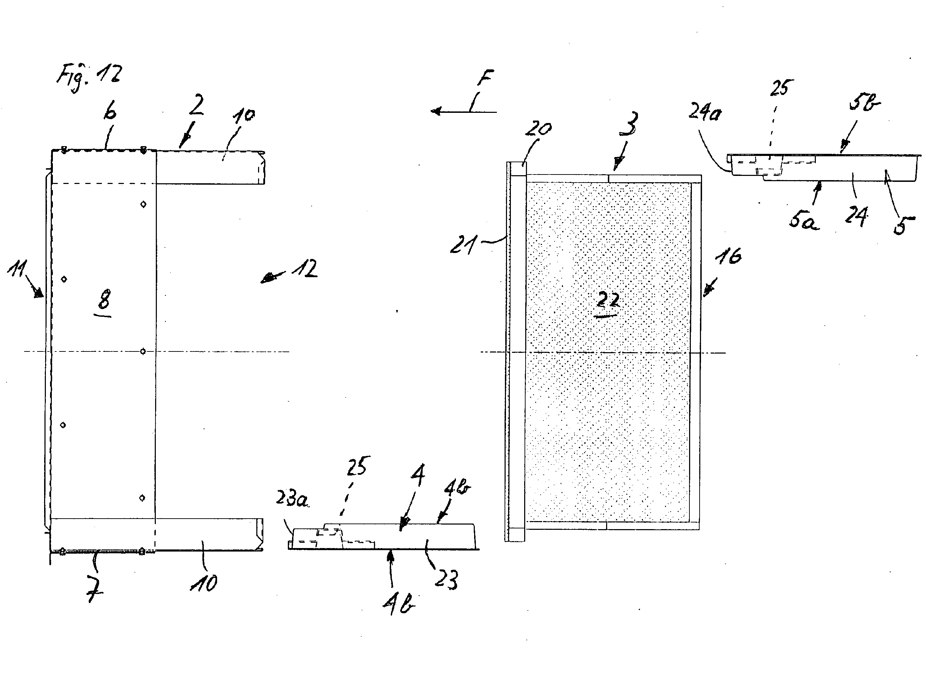

Anhand der Figuren 4 bis 11 werden nun die einzelnen Bauteile der Luftfiltereinheit 1, nämlich der Einbaurahmen 2, das Filterelement 3 und die Adapterelemente 4 und 5 näher erläutert.

Der in den Figuren 4 und 5 dargestellte Einbaurahmen 2 hat eine bestimmte Normgröße und ist für die Aufnahme eines ebenfalls genormten Luftfilters mit entsprechenden Außenabmessungen ausgelegt, im vorliegenden Fall für die Aufnahme eines Luftfilters mit einer Höhe und einer Breite von je 610 mm. Entsprechend sind die Innenabmessungen des Einbaurahmens 2, d.h. die Höhe H1 und die Breite B1, etwas kleiner als 610 x 610 mm.

Der einen quadratischen Querschnitt aufweisende, kastenförmige Einbaurahmen 2 weist eine obere Wand 6, eine untere Wand 7 sowie zwei Seitenwände 8 und 9 auf. Die Wände 6 bis 9 sind an vier Winkelprofilen 10 befestigt, die die Ecken des Einbaurahmens 2 bilden. In der Darstellung des Einbaurahmens 2 in den Figuren 2 und 3 ist der untere Teil der Seitenwand 8 weggeschnitten. Der Einbaurahmen 2 weist einen Lufteinlass 11 sowie einen diesem gegenüber liegenden Luftauslass 12 auf. Die Luftströmungsrichtung ist durch den Pfeil E angedeutet. Auf der Seite des Lufteinlasses 11 weist der Einbaurahmen 2 einen umlaufenden Flansch 13 auf, der sich von den Wänden 6 bis 9 nach einwärts erstreckt. An ihrem im Bereich des Luftauslasses 12 liegenden Ende sind die Winkelprofile 10 mit zurückgebogenen Laschen 14 und 15 versehen, von denen die Laschen 14 als Rastelemente dienen, wie das noch näher erläutert werden wird. Die zurückgebogenen Laschen 14, 15 sind üblicherweise zum Befestigen von Halteelementen bestimmt, die zum Halten des in den Einbaurahmen 2 eingeschobenen, zu diesem Einbaurahmen passenden Normfilterelement dienen. Die Laschen 14, 15 übernehmen jedoch bei der erfindungsgemäßen Luftfiltereinheit 1 eine andere Funktion, wie das noch beschrieben werden wird.

Die Figuren 6 bis 8 zeigen das Filterelement 3, dessen Außenabmessungen kleiner sind als die Innenabmessungen des Einbaurahmens 2 gemäss den Figuren 4 und 5. Die auf der Außenseite des Filterelementes 3 gemessene Höhe H2 und Breite B2 betragen beim gezeigten Ausführungsbeispiel je 592 mm. Dieses Filterelement 3 ist somit von den Außenabmessungen her ursprünglich nicht dazu bestimmt, in den vorgängig beschriebenen Norm-Einbaurahmen 2 eingebaut zu werden. Das Filterelement 3 ist beispielsweise ein "Luwa" Feinstaubfilter FP, wie er von der Anmelderin vertrieben wird, und ist dem in Figur 3 der eingangs erwähnten EP 0 479 114 A1 gezeigten Filterelement ähnlich. Das Filterelement 3 weist ein Filtergehäuse 16 auf, das durch einen oberen Abdeckteil 17, einen unteren Abdeckteil 18 sowie Verbindungsteile 19, die die beiden Abdeckteile 17 und 18 miteinander verbinden, gebildet wird. Zum Filtergehäuse 16 gehört ferner ein umlaufender Rahmen 20, der auf der Seite des Lufteinlasses 11 angeordnet ist. An der freien Stirnfläche des Rahmens 20 ist ein umlaufendes Dichtungselement 21 befestigt, das aus einem elastisch komprimierbaren Material besteht. Im Innern des Gehäuses 16 ist ein zickzackförmig verlaufendes Filtermedium 22 angeordnet.

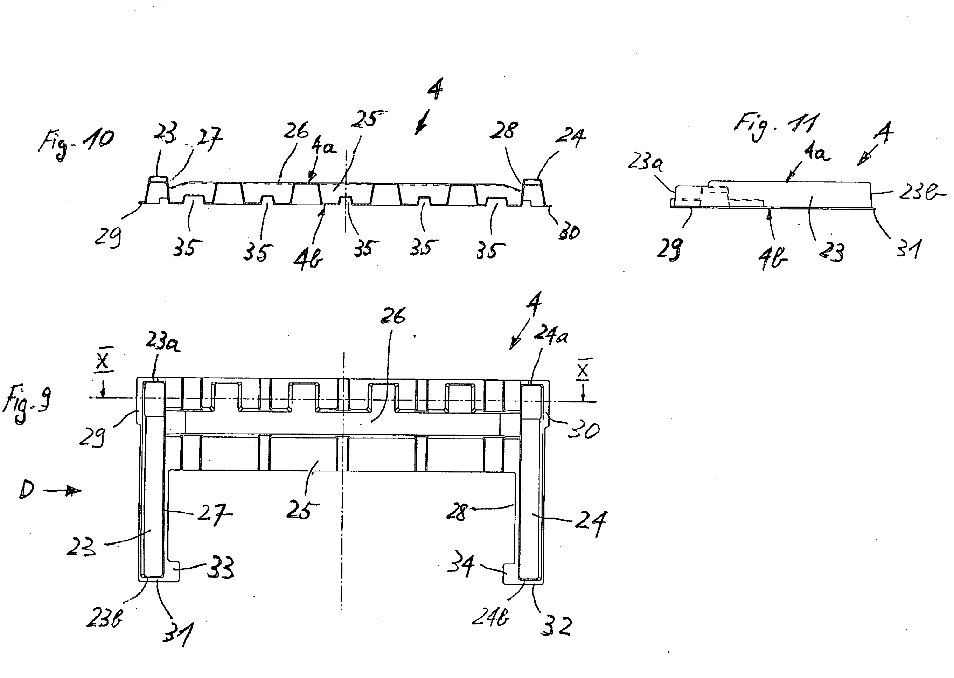

In den Figuren 9 bis 11 ist die Ausgestaltung des Adapterelementes 4 gezeigt. Das andere Adapterelement 5 ist jedoch gleich ausgebildet wie das Adapterelement 4, d.h. die beiden Adapterelemente 4 und 5 haben eine identische Form. Die Adapterteile 4 und 5 sind Formteile aus Kunststoff und bestehen vorzugsweise aus einem tiefziehbaren Kunststoff. Die Adapterelemente 4 und 5 können aber auch aus Blech geformt sein. Die gleichartige Ausgestaltung der Formteile 4 und 5 hat den Vorteil der Stapelbarkeit sowie einer vergleichsweise einfachen Herstellung.

Wie die Figuren 9 bis 11 zeigen, wird das Adapterelement 4 (und somit auch das Adapterelement 5) durch zwei in einem Abstand und parallel zueinander verlaufende Seitenteile 23 und 24 und einem diese Seitenteile 23 und 24 miteinander verbindenden Verbindungsteil 25 gebildet, das rechtwinklig zu den Seitenteilen 23 und 24 verläuft. Die Seitenteile 23 und 24 weisen eine vordere Endfläche 23a bzw. 24a sowie eine hintere Endfläche 23b bzw. 24b auf. Auf der Oberseite 4a des Adapterelementes 4 bildet das Verbindungsteil 25 eine Auflagefläche 26 für das Filterelement 3. Die beiden Seitenteile 23 und 24 weisen an den einander zugekehrten Seiten Führungsflächen 27 und 28 auf, die das Filterelement 3 zwischen sich aufnehmen. Das Adapterelement 4 ist ferner mit seitlichen Positionierelementen 29 und 30 versehen, die von den Seitenteilen 23 und 24 nach der Seite wegragen. Mittels dieser Positionierelemente 29 und 30 werden die Adapterelemente 4 und 5 im Einbaurahmen 2 geführt. Von der hinteren Endfläche 23b, 24b der Seitenteile 23 und 24 ragen Vorsprünge 31 bzw. 32 weg, die dazu bestimmt sind, mit den zurückgebogenen Laschen 14 am Ende der Winkelprofile 10 des Einbaurahmens 2 zusammenzuwirken. An der dem anderen Seitenteil zugekehrten Innenseite jedes Seitenteils 23, 24 sind abstehende Griffteile 33, 34 vorhanden, die zum Erfassen des Adapterelementes 4 dienen.

Auf der Unterseite 4b des Adapterelementes 4 sind Vertiefungen 35 ausgebildet, die parallel zueinander verlaufen und sich in Richtung der Seitenteile 23 und 24 erstrecken. Diese Vertiefungen 35 dienen zur Aufnahme von Befestigungsmitteln 36, im vorliegenden Fall Schrauben, mittels derer mehrere aneinander stoßende, zu einer Wand zusammengebaute Einbaurahmen 2 miteinander verbunden sind. In der Figur 3 ist mit dem Bezugszeichen 2' ein solcher weiterer Einbaurahmen angedeutet.

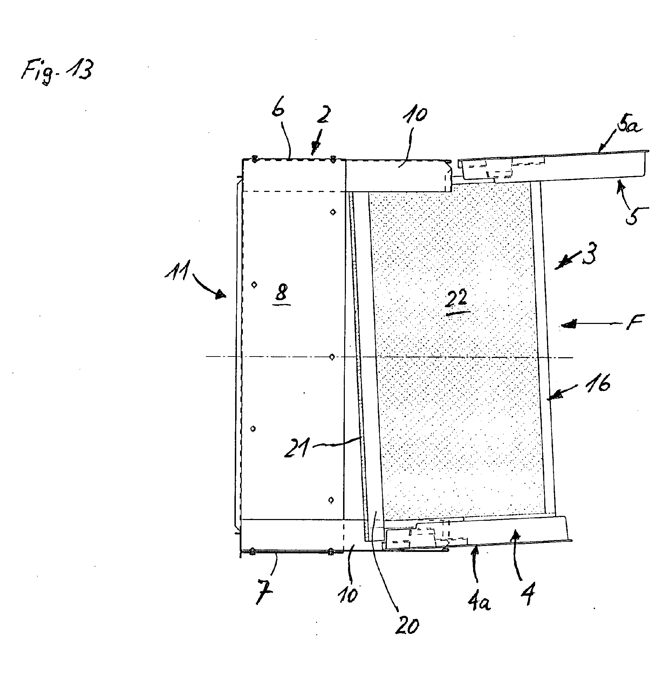

Anhand der Figuren 12 und 13 wird nachfolgend das Einbauen des Filterelementes 3 in den Einbaurahmen 2 kurz erläutert.

In der Figur 12 ist der Einbaurahmen 2, das Filterelement 3 und die Adapterelemente 4 und 5 vor dem Zusammenbauen gezeigt. Die Adapterelemente 4 und 5 sind mit der vorderen Endfläche 23a, 24a der Seitenteile 23, 24 dem Luftauslass 12 des Einbaurahmens 2 zugekehrt, wobei die Unterseite 4b des unterhalb des Filterelementes 3 zu liegen kommenden Adapterelementes 4 nach unten und die Unterseite 5b des oberhalb des Filterelementes 3 zu liegen kommenden Adapterelementes 5 nach oben gerichtet ist.

Wie aus der Figur 13 hervorgeht, wird das Filterelement 3 zusammen mit dem unten liegenden Adapterelement 4 und dem oben liegenden Adapterelement 5 von Hand und ohne Zuhilfenahme von Werkzeugen in Richtung eines Pfeiles F (Einschubrichtung) in den Einbaurahmen 2 eingeschoben. Dabei ist die Unterseite 4b des Adapterelementes 4 der unteren Wand des Einbaurahmens 2 und die Unterseite 5b des oberen Adapterelementes 5 der oberen Wand 6 des Einbaurahmens 2 zugekehrt. Die seitlich abstehenden Positionierelemente 29 und 30 der Adapterelemente 4 und 5 werden durch die Winkelprofile 10 geführt, wodurch eine Positionierung der Adapterelemente 4 und 5 im Einbaurahmen 2 erfolgt. Das Filtergehäuse 16 des Filterelementes 3 liegt an den Führungsflächen 27, 28 der Seitenteile 23, 24 der Adapterelemente 4 und 5 an, wodurch das Filtergehäuse 3 seitlich geführt wird. Das Filtergehäuse liegt zudem auf den Auflageflächen 26 der Verbindungsteile 25 der Adapterelemente 4 und 5 auf. Dabei übergreift der Rahmen 20 des Filtergehäuses 16 die Seitenteile 23, 24 der Adapterelemente 4 und 5 und steht mit den Endflächen 23a, 24a der Seitenteile 23, 24 in Berührung.

Am Ende des Einbauvorganges wird das Dichtungselement 21 des Filterelementes 3 elastisch komprimiert, was es den nach hinten weisenden Vorsprüngen 31, 32 der Seitenteile 23, 24 der Adapterelemente 4 und 5 ermöglicht, die zurückgebogenen Laschen 14 an den Enden der Winkelelemente 10 zu überfahren. Wird nun das Filtergehäuse 16 losgelassen, drückt das sich nun entspannende Dichtungselement 21 das Filtergehäuse 16 und damit die Adapterelemente 4 und 5 entgegen der Einbaurichtung zurück. Die Vorsprünge 31, 32 an den Seitenteilen 23, der Adapterelemente 4 und 5 untergreifen die Laschen 14, die nun als Rastelemente wirken und eine Verriegelung der Adapterelemente 4 und 5 und des Filterelementes 3 im Einbaurahmen 2 sicherstellen (siehe Figur 3).

Diese Verriegelung kann zum Ausbauen des Filterelementes 3 durch Ausübung einer Druckkraft auf die Adapterelemente 4 und 5 in Einschubrichtung F problemlos wieder gelöst werden. Dazu können die Griffteile 33, 34 an den Adapterelemente 4 und 5 benutzt werden. Die Adapterelemente 4 und 5 werden bei dieser Druckausübung in Richtung zum Lufteinlass 11 verschoben, wobei das Dichtungselement 21 zusammengedrückt wird. Die Vorsprünge 31, 32 der Adapterelemente 4 und 5 lösen sich von den Rastelementen 14 und die Adapterelemente 4 und 5 samt dem Filterelement 3 können aus dem Einbaurahmen 2 herausgezogen werden. Es ist somit möglich, ohne Zerstörung der Adapterelemente 4 und 5 das Filterelement 3 von Hand und ohne Zuhilfenahme von Werkzeugen wieder auszubauen.

Die Adapterelemente 4 und 5 überbrücken somit den Zwischenraum zwischen dem Filterelement 3 und dem Einbaurahmen 2 und gleichen die Unterschiede in den Abmessungen vom Filterelement 3 und dem Einbaurahmen 2 aus. Das Filterelement 3 wird somit durch die Adapterelemente 4 terelement 3 wird somit durch die Adapterelemente 4 und 5 im Einbaurahmen 2 positioniert.

Es versteht sich, dass im Rahmen des erfindungsgemäßen Konzeptes verschiedene Varianten der Adapteranordnung möglich sind, die unter anderem auch Anpassungen an unterschiedliche Arten von Einbaurahmen und/oder Filterelementen betreffen. Auf einige der möglichen Varianten wird im Folgenden hingewiesen.

Die Verriegelung der Adapterelemente 4 und 5 im Einbaurahmen 2 kann auch auf andere als die gezeigte Weise erfolgen, z.B. durch von Hand betätigbare Verriegelungsmittel an den Adapterelementen 4 und 5 und/oder am Einbaurahmen 2.

Jedes Adapterelement 4, 5 kann statt wie gezeigt einstückig aus zwei gleichartigen Teilen bestehen. Jedes dieser gleichartigen Teile wird durch einen Seitenteil 23 oder 24 und einen mit diesem Seitenteil einstückigen Abschnitt des Verbindungsteils 25 gebildet.

Die Adapterelemente 4, 5 könnten auch fest mit dem Filterelement verbunden werden. Diese Lösung hat jedoch den Nachteil, dass die Adapterelemente 4, 5, nicht mehr zum Einbauen mit einem anderen Filterelement 3 verwendet werden können.

Anstelle des Dichtungselementes 21 kann ein separates elastisch komprimierbares Element vorgesehen werden, das an geeigneter Stelle eingebaut wird und zwischen dem Einbaurahmen 2 und den Adapterelementen 4, 5 wirkt und die Adapterelemente 4, 5 in Luftströmungsrichtung E zurückdrängt.

Schließlich kann das Dichtungselement 21 statt am Rahmen 20 des Filterelementes 3 auf der Innenseite des Flansches 13 des Einbaurahmens 2 befestigt werden.

## Patentansprüche

1. Luftfiltereinheit mit einem kastenförmigen Einbaurahmen (2), der einen rechteckigen Querschnitt sowie einen Lufteinlass (11) und einen diesen gegenüberliegenden Luftauslass (12) aufweist, und mit einem in den Einbaurahmen (2) eingebauten Filterelement (3), **dadurch gekennzeichnet, dass** die Außenabmessungen (H2, B2) des Filterelementes (3) kleiner sind als die entsprechenden Innenabmessungen (Hl, BI) des Einbaurahmens (2) und dass zwischen dem Einbaurahmen (2) und dem Filterelement (3) eine die Unterschiede in den Abmessungen von Filterelement (3) und Einbaurahmen (2) ausgleichende Adapteranordnung (4, 5) eingesetzt ist, die das Filterelement (3) im Einbaurahmen (2) positioniert.

2. Luftfiltereinheit nach Anspruch 1, **dadurch gekennzeichnet, dass** das Filterelement (3) in der Breite (B2) und in der Höhe (H2) kleiner ist als die Innenabmessungen des Einbaurahmens (2) in der Breite (B1) und in der Höhe (H1).

3. Luftfiltereinheit nach Anspruch 1 oder 2, **dadurch gekennzeichnet, dass** die Adapteranordnung (4, 5) im Einbaurahmen (2) geführt ist und das Filterelement (3) in seiner Lage bezüglich des Einbaurahmens (2) hält.

4. Luftfiltereinheit nach einem der Ansprüche 1 bis 10, **dadurch gekennzeichnet, dass** die Adapteranordnung (4,5) beim Einbauen des Filterelementes (3) in den Einbaurahmen (2) zusammen mit dem Filterelement (3), vorzugsweise in einer Richtung (F) einschiebbar ist, die der Luftströmungsrichtung (E) entgegengesetzt ist.

5. Luftfiltereinheit nach einem der Ansprüche 1 bis 4, **dadurch gekennzeichnet, dass** die Adapteranordnung (4, 5) als eine vom Filterelement (3) und dem Einbaurahmen (2) getrennte Baueinheit ausgebildet ist.

6. Luftfiltereinheit nach einem der Ansprüche 1 bis 5, **dadurch gekennzeichnet, dass** die Adapteranordnung (4, 5) von Hand lösbar im Einbaurahmen (2) gehalten ist.

7. Luftfiltereinheit nach einem der Ansprüche 1 bis 6, **dadurch gekennzeichnet, dass** die Adapteranordnung durch wenigstens zwei voneinander getrennte Adapterelemente (4, 5) gebildet ist.

8. Luftfiltereinheit nach Anspruch 7, **dadurch gekennzeichnet, dass** die Adapterelemente (4,5) von identischer Form sind.

9. Luftfiltereinheit nach Anspruch 7 oder 8, **dadurch gekennzeichnet, dass** an zwei sich gegenüberliegenden Seiten des Filterelements (3) zwischen diesem und dem Einbaurahmen (2) die Adapterelemente (4,5) angeordnet sind.

10. Luftfiltereinheit nach einem der Ansprüche 7 bis 9, **dadurch gekennzeichnet, dass** die Adapterelemente (4,5) im eingebauten Zustand mittels eines elastisch zusammendrückbaren Elements, das zwischen dem Einbaurahmen (2) und den Adapterelementen (4,5) wirkt, in ihrer Lage im Einbaurahmen (2) fixiert sind.

11. Luftfiltereinheit nach einem der Ansprüche 4 bis 10, **dadurch gekennzeichnet, dass** das elastisch komprimierbare Element auf die Adapterelemente (4,5) in einer Richtung, die der Einschieberichtung (F) der Adapterelemente (4,5) entgegengesetzt ist, eine Kraft ausübt, die die Adapterelemente (4,5) gegen am Einbaurahmen (2) vorgesehene Rastelemente (14) drückt.

12. Luftfiltereinheit nach Anspruch 11, **dadurch gekennzeichnet, dass** die Rastelemente (14) auf der Seite des Luftauslasses (12) am Einbaurahmen angeordnet sind.

13. Luftfiltereinheit nach einem der Ansprüche 1 bis 12, **dadurch gekennzeichnet, dass** der Einbaurahmen (2) auf der Seite des Lufteinlasses (11) einen Flansch (13) aufweist, an dem das Filterelement (3) unter Zwischenschaltung eines Dichtungselementes (21) anliegt.

14. Luftfiltereinheit nach Anspruch 11, **dadurch gekennzeichnet, dass** das Filterelement (3) ein Filtergehäuse (16) und ein in diesem untergebrachtes Filtermedium (22) aufweist und das Dichtungselement (21) am Filtergehäuse (16) angebracht ist.

15. Luftfiltereinheit nach dem Anspruch 13 oder 14, **dadurch gekennzeichnet, dass** das elastisch zusammendrückbare Element durch das Dichtungselement (21) gebildet ist.

16. Luftfiltereinheit nach einem der Ansprüche 6 bis 15, **dadurch gekennzeichnet, dass** die Adapterelemente (5) mit seitlichen Positionierelementen (29,30) zur Führung durch den Einbaurahmen (2) versehen sind.

17. Luftfiltereinheit nach einem der Ansprüche 6 bis 16, **dadurch gekennzeichnet, dass** die Adapterelemente (4,5) zwei sich in Luftströmungsrichtung (E) erstreckende, in einem Abstand voneinander angeordnete Führungsflächen (27,28) aufweisen, die das Filterelement (3) zwischen sich aufnehmen.

18. Luftfiltereinheit nach einem der Ansprüche 6 bis 17, **dadurch gekennzeichnet, dass** die Adapterelemente (4,5) mit einer Auflagefläche (26) für das Filterelement (3) versehen sind, auf denen das Filtergehäuse (16) des Filterelementes (3) aufliegt.

19. Luftfiltereinheit nach einem der Ansprüche 6 bis 18, **dadurch gekennzeichnet, dass** die Adapterelemente (4,5) am, im Bereich des Luftauslasses (12) liegenden Ende Griffteile (33,34) zum manuellen Erfassen der Adapterelemente (4,5) aufweisen.

20. Luftfiltereinheit nach einem der Ansprüche 6 bis 19, **dadurch gekennzeichnet, dass** die Adapterelemente (4,5) auf der, einer Seitenwand (6,7) des Einbaurahmens (2) zugekehrten Seite (4b,5b) mit Vertiefungen (35) zur Aufnahme von Befestigungsmitteln (36), mittels derer aneinander gebaute Einbaurahmen (2,2') miteinander verbunden sind, versehen sind.

21. Luftfiltereinheit nach einem der Ansprüche 6 bis 20, **dadurch gekennzeichnet, dass** die Adapterelemente (4,5) Formteile aus Blech oder Kunststoff sind und vorzugsweise aus einem tiefziehbaren Kunststoff bestehen.
